# EUROPEAN PATENT APPLICATION

(11) **EP 4 671 162 A1**
(43) Date of publication of application: **31.12.2025**
(21) Application number: 23924194.6
(22) Date of filing: 24.11.2023
(51) Int. Cl.: B65G 35/00

(54) **SELF-PROPELLED PALLET TRANSPORT APPARATUS**

(30) Priority: 21.02.2023 JP 2023025060
(71) Applicant: SUS Co., LTD., Shizuoka-shi, Shizuoka, 422-8067 (JP)
(72) Inventor: ISHIDA Yasuo, Sizuoka-shi, Shizuoka 422-8067 (JP); Osada Nobuyuki, Kikugawa-shi, Shizuoka 439-0037 (JP); ONO Masato, Kikugawa-shi, Shizuoka 439-0037 (JP); SHINMI Fumiyasu, Kikugawa-shi, Shizuoka 439-0037 (JP)
(74) Representative: Grünecker Patent- und Rechtsanwälte PartG mbB
(86) International application number: PCT/JP2023/042167
(87) International publication number: WO 2024/176550

(57) **Abstract**

The purpose of the present invention is to provide a self-propelled pallet transport apparatus in which the configuration can be simplified and for which breakdown and assembly can be facilitated. In the present invention: a transport path is configured by linking a plurality of frames along a prescribed route; a cartridge provided with a plurality of rollers is installed on the two left and right ends of the frames in a lateral cross-section thereof, whereby a left-side roller conveyor and a right-side roller conveyor are configured along the prescribed route; and a self-propelled pallet is caused to travel on the left-side roller conveyor and the right-side roller conveyor, whereby desired articles to be transported are transported.

## Description

### TECHNICAL FIELD

The present invention relates to a self-propelled pallet transport apparatus, and in particular, the present invention relates to those, which causes a self-propelled pallet to travel along a roller conveyor installed along an arbitrary track, to allow transporting of a transported object from an arbitrary location to another arbitrary location.

### BACKGROUND ART

There are several conventional arts disclosing configurations of self-propelled pallet transport apparatuses, in which transported objects are transported by causing self-propelled pallets to travel, for example, in Patent Document 1, Patent Document 2, Patent Document 3, Patent Document 4, Patent Document 5 and Patent Document 6.

First, Patent Document 1 discloses an invention, in which a work placed on a work placement unit is transported, by causing a self-propelled work transport pallet to travel by itself along a pair of work transport pallet rails.

Next, Patent Document 2 discloses an invention, in which a work placed on a work placement unit is transported, by causing a self-propelled work transport pallet to travel by itself along a track.

Next, Patent Document 3 discloses an invention, in which a work placed on a pallet installed in a transport vehicle is transported, by causing the transport vehicle to travel by itself along an inner rail and an outer rail.

Next, Patent Document 4 discloses an invention, in which a pallet is moved via roller conveyors installed on the right and left.

Next, Patent Document 5 discloses an invention, in which a pallet is transported by appropriately connecting motor roller units to configure an arbitrary transport path.

And moreover, Patent Document 6 discloses an invention, in which a pallet is transported by connecting pallet loader rail units to configure an arbitrary transport path.

### REFERENCE DOCUMENTS OF CONVENTIONAL ART

### PATENT DOCUMENT(S)

Patent Document 1: Official Gazette, Japan Patent Publication No. 2003-306144A.
Patent Document 2: Official Gazette, Japan Patent Publication No. 2003-345412A.
Patent Document 3: Official Gazette, Japan Patent Publication No. 2009-190838A.
Patent Document 4: Official Gazette, Japan Patent Publication No. 2015-151248A.
Patent Document 5: Official Gazette, Japan Patent Publication No. 1984-22814A.
Patent Document 6: Official Gazette, Japan Patent Publication No. 2018-58528A.

### SUMMARY OF THE INVENTION

### PROBLEMS TO BE SOLVED BY INVENTION

However, the configurations according to the conventional arts as described above have the following problem.

That is, the overall configurations, such as the configurations of self-propelled pallets, the configurations of tracks, are complex, and in addition, the assembling thereof is laborious.

In the light of the above problem, it is an object of the present invention to provide a self-propelled pallet transport apparatus, that can simplify the configuration, and also facilitate assembling / disassembling thereof.

### MEANS TO SOLVE THE PROBLEM

To achieve the objects mentioned above, according to Claim 1 of the present invention, there is a self-propelled pallet transport apparatus, in which: a transport path is configured by consecutively connecting a plurality of frames along a predetermined route; a left-side roller conveyor and a right-side roller conveyor are configured along the predetermined route, by installing cartridges provided with a plurality of rollers, both on the right and left sides of a cross-section plane of the frame; and an arbitrary transported object is transported by causing a self-propelled pallet to travel on the left-side roller conveyor and the right-side roller conveyor.

Moreover, according to Claim 2 of the present invention, with regard to the self-propelled pallet transport apparatus as claimed in Claim 1, the frame is protrusively provided with a rail; the self-propelled pallet is provided with a drive wheel and a driven wheel, and the rail is sandwiched by the drive wheel and the driven wheel both from the right and the left; and the self-propelled pallet is caused to travel along the rail by driving the drive wheel by a drive motor.

Moreover, according to Claim 3 of the present invention, with regard to the self-propelled pallet transport apparatus as claimed in Claim 2, the drive wheel and the driven wheel are pressed to become in contact with the rail.

Moreover, according to Claim 4 of the present invention, with regard to the self-propelled pallet transport apparatus as claimed in Claim 2, the driven wheels are provided in a plural number.

Moreover, according to Claim 5 of the present invention, with regard to the self-propelled pallet transport apparatus as claimed in Claim 2: a power supply conductor is laid on the rail; the self-propelled pallet is provided with an electrode to become in contact with the power supply conductor; and electric power is supplied to the self-propelled pallet by contact of the electrode with the power supply conductor.

Moreover, according to Claim 6 of the present invention, with regard to the self-propelled pallet transport apparatus as claimed in Claim 5: the power supply conductors are provided both on the right and left sides of the rail; and the electrodes are correspondingly provided both on the right and left sides.

Moreover, according to Claim 7 of the present invention, with regard to the self-propelled pallet transport apparatus as claimed in Claim 6, the electrodes both on the right and left sides are pressed to become in contact with the power supply conductors.

Moreover, according to Claim 8 of the present invention, with regard to the self-propelled pallet transport apparatus as claimed in Claim 5, the electrodes are provided in a plural number in a transport direction.

Moreover, according to Claim 9 of the present invention, with regard to the self-propelled pallet transport apparatus as claimed in Claim 1, the cartridge can be attached to / detached from the frame in a state that the rollers are provided in a plural number.

Moreover, according to Claim 10 of the present invention, with regard to the self-propelled pallet transport apparatus as claimed in Claim 2, the rail is in T-shaped, and is configured to allow the drive wheel and the driven wheel to become in rotative contact with both right and left ends of a horizontal part.

And moreover, according to Claim 4 of the present invention, with regard to the self-propelled pallet transport apparatus as claimed in Claim 8, a pair of the electrodes is provided in a front end part, and another pair of the electrodes is provided in a rear end part, in the transport direction.

### EFFECT OF THE INVENTION

As described above, according to the self-propelled pallet transport apparatus as claimed in Claim 1 of the present invention, there is a self-propelled pallet transport apparatus, in which: a transport path is configured by consecutively connecting a plurality of frames along a predetermined route; a left-side roller conveyor and a right-side roller conveyor are configured along the predetermined route, by installing cartridges provided with a plurality of rollers, both on the right and left sides of a cross-section plane of the frame; and an arbitrary transported object is transported by causing a self-propelled pallet to travel on the left-side roller conveyor and the right-side roller conveyor. Therefore, it is possible to simplify the configuration and to facilitate the assembling of the self-propelled pallet transport apparatus.

Moreover, according to Claim 2 of the present invention, with regard to the self-propelled pallet transport apparatus as claimed in Claim 1, the frame is protrusively provided with a rail; the self-propelled pallet is provided with a drive wheel and a driven wheel, and the rail is sandwiched by the drive wheel and the driven wheel both from the right and the left; and the self-propelled pallet is caused to travel along the rail by driving the drive wheel by a drive motor. Therefore, it is possible to provide secure and stable self-propelled travel.

Moreover, according to Claim 3 of the present invention, with regard to the self-propelled pallet transport apparatus as claimed in Claim 2, the drive wheel and the driven wheel are pressed to become in contact with the rail. Therefore, it is possible to provide secure and stable self-propelled travel.

Moreover, according to Claim 4 of the present invention, with regard to the self-propelled pallet transport apparatus as claimed in Claim 2, the driven wheels are provided in a plural number. Therefore, it is possible to provide secure and stable self-propelled travel.

Moreover, according to Claim 5 of the present invention, with regard to the self-propelled pallet transport apparatus as claimed in Claim 2: a power supply conductor is laid on the rail; the self-propelled pallet is provided with an electrode to become in contact with the power supply conductor; and electric power is supplied to the self-propelled pallet by contact of the electrode with the power supply conductor. Therefore, it is possible to supply the electric power securely and stably.

Moreover, according to Claim 6 of the present invention, with regard to the self-propelled pallet transport apparatus as claimed in Claim 5: the power supply conductors are provided both on the right and left sides of the rail; and the electrodes are correspondingly provided both on the right and left sides. Therefore, it is possible to supply the electric power securely and stably.

Moreover, according to Claim 7 of the present invention, with regard to the self-propelled pallet transport apparatus as claimed in Claim 6, the electrodes both on the right and left sides are pressed to become in contact with the power supply conductors. Therefore, it is possible to supply the electric power securely and stably.

Moreover, according to Claim 8 of the present invention, with regard to the self-propelled pallet transport apparatus as claimed in Claim 5, the electrodes are provided in a plural number in a transport direction. Therefore, it is possible to supply the electric power securely and stably.

Moreover, according to Claim 9 of the present invention, with regard to the self-propelled pallet transport apparatus as claimed in Claim 1, the cartridge can be attached to / detached from the frame in a state that the rollers are provided in a plural number. Therefore, it is possible to disassemble / assemble the roller conveyors easily.

Moreover, according to Claim 10 of the present invention, with regard to the self-propelled pallet transport apparatus as claimed in Claim 2, the rail is in T-shaped, and is configured to allow the drive wheel and the driven wheel to become in rotative contact with both right and left ends of a horizontal part. Therefore, it is possible to accomplish stabler driving.

And moreover, according to Claim 4 of the present invention, with regard to the self-propelled pallet transport apparatus as claimed in Claim 8, a pair of the electrodes is provided in a front end part, and another pair of the electrodes is provided in a rear end part, in the transport direction. Therefore, it is possible to accomplish stabler power supply.

### BRIEF DESCRIPTION OF DRAWINGS

[Figure 1] Fig. 1 is a control system diagram showing an overall configuration of a self-propelled pallet transport apparatus according to a first embodiment of the present invention.
[Figure 2] Fig. 2 is a perspective view showing a part of a transport path of the self-propelled pallet transport apparatus according to the first embodiment of the present invention.
[Figure 3] Fig. 3 is a perspective view showing a part of the transport path (a home position as an example) and a self-propelled pallet of the self-propelled pallet transport apparatus according to the first embodiment of the present invention.
[Figure 4] Fig. 4 is a cross-sectional view as viewed from IV-IV of Fig. 3 according to the first embodiment of the present invention.
[Figure 5] Fig. 5 is an exploded perspective view showing a part of a left-side roller conveyor installed in the transport path of the self-propelled pallet transport apparatus according to the first embodiment of the present invention.
[Figure 6] Fig. 6 is a plan view showing a part of the left-side roller conveyor installed in the transport path of the self-propelled pallet transport apparatus according to the first embodiment of the present invention.
[Figure 7] Fig. 7 is a cross-sectional view as viewed from VII-VII of Fig. 6 according to the first embodiment of the present invention.
[Figure 8] Fig. 8 is a cross-sectional view as viewed from VIII-VIII of Fig. 6 according to the first embodiment of the present invention.
[Figure 9] Fig. 9 is a perspective view of the self-propelled pallet as viewed from a diagonally upward viewpoint according to the first embodiment of the present invention.
[Figure 10] Fig. 10 is a perspective view of the self-propelled pallet as viewed from a diagonally downward viewpoint according to the first embodiment of the present invention.
[Figure 11] Fig. 11 is a table showing an example of route information transmitted from a host PC to the self-propelled pallet according to the first embodiment of the present invention.
[Figure 12] Fig. 12 is a flowchart of information processing at a home (HOME) of the transport path of the self-propelled pallet transport apparatus according to the first embodiment of the present invention.
[Figure 13] Fig. 13 is a flowchart of information processing at the home (HOME) of the transport path of the self-propelled pallet transport apparatus according to the first embodiment of the present invention.
[Figure 14] Fig. 14 is a flowchart of information processing at stations (ST1 - STn) of the transport path of the self-propelled pallet transport apparatus according to the first embodiment of the present invention.
[Figure 15] Fig. 15 is a flowchart of information processing at branch junctions (BR1 - BRn) of the transport path of the self-propelled pallet transport apparatus according to the first embodiment of the present invention.
[Figure 16] Fig. 16 is a flowchart of information processing at join junctions (JO1 - JOn) of the transport path of the self-propelled pallet transport apparatus according to the first embodiment of the present invention.
[Figure 17] Fig. 17 is a flowchart of information processing of the self-propelled pallet at the home (HOME) of the transport path of the self-propelled pallet transport apparatus according to the first embodiment of the present invention.
[Figure 18] Fig. 18 is a flowchart of information processing at the stations (ST1 - STn) of the transport path of the self-propelled pallet transport apparatus according to the first embodiment of the present invention.
[Figure 19] Fig. 19 is a flowchart of information processing at the branch junctions (BR1 - BRn) of the transport path of the self-propelled pallet transport apparatus according to the first embodiment of the present invention.
[Figure 20] Fig. 20 is a flowchart of information processing at the join junctions (JO1 - JOn) of the transport path of the self-propelled pallet transport apparatus according to the first embodiment of the present invention.
[Figure 21] Fig. 21 is a perspective view showing a part of a transport path of the self-propelled pallet transport apparatus according to a second embodiment of the present invention.
[Figure 22] Fig. 22 is a perspective view showing a part of the transport path (a home position as an example) and a self-propelled pallet of the self-propelled pallet transport apparatus according to the second embodiment of the present invention.
[Figure 23] Fig. 23 is a cross-sectional view as viewed from XXIII-XXIII of Fig. 22 according to the second embodiment of the present invention.
[Figure 24] Fig. 24 is a perspective view of the self-propelled pallet as viewed from a diagonally upward viewpoint according to the second embodiment of the present invention.
[Figure 25] Fig. 25 is a perspective view of the self-propelled pallet as viewed from a diagonally downward viewpoint according to the second embodiment of the present invention.
[Figure 26] Fig. 26 is a cross-sectional view as viewed from XXVI-XXVI of Fig. 23 according to the second embodiment of the present invention.

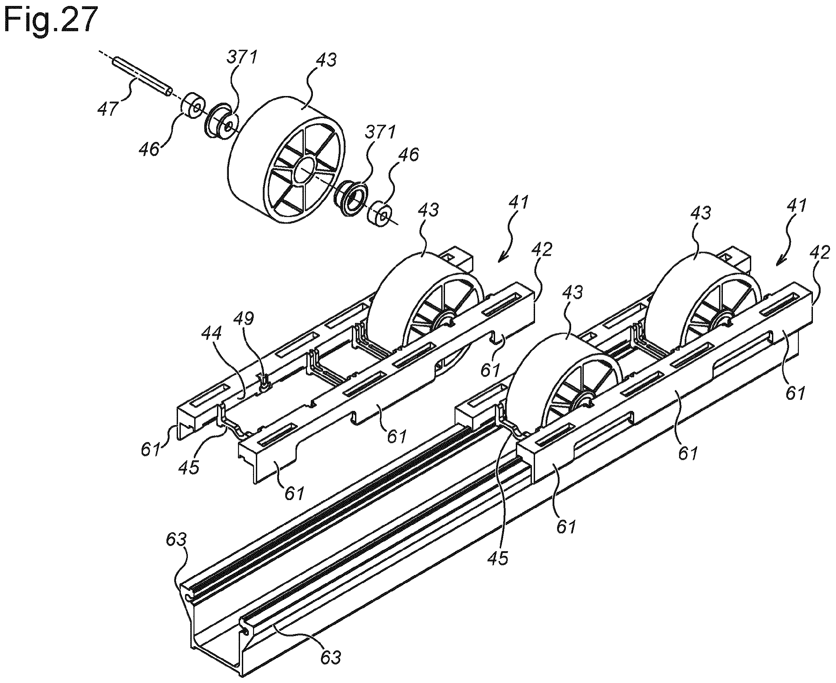

[Figure 27] Fig. 27 is an exploded perspective view showing a part of a left-side roller conveyor installed in the transport path of the self-propelled pallet transport apparatus according to the second embodiment of the present invention.

### MODE(S) FOR CARRYING OUT THE INVENTION

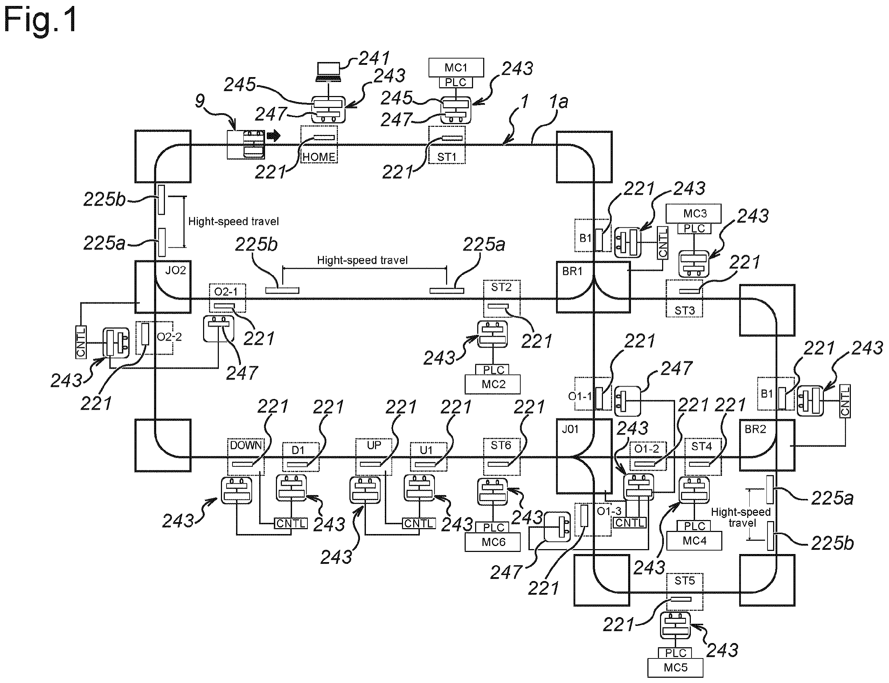

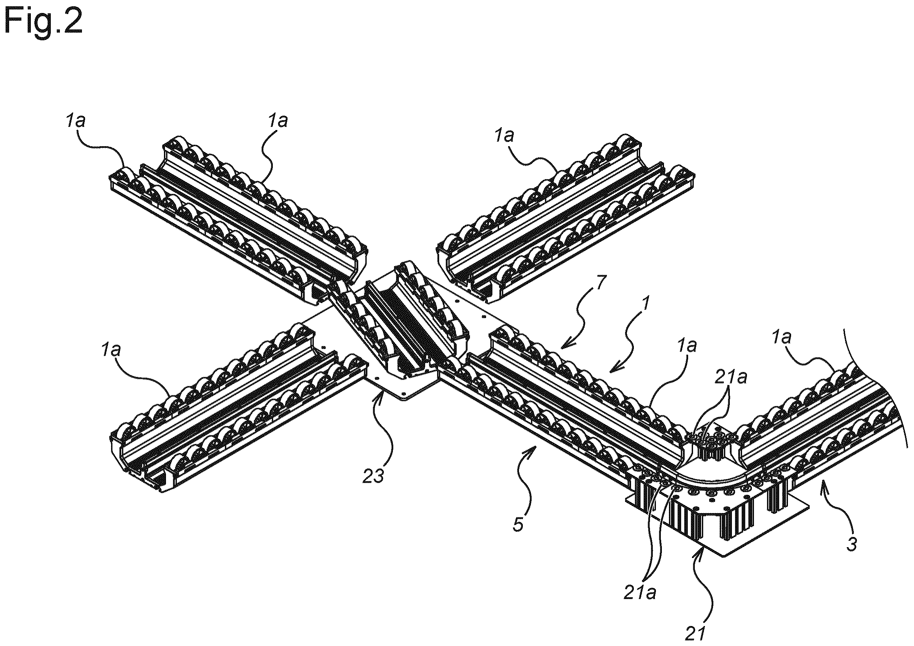

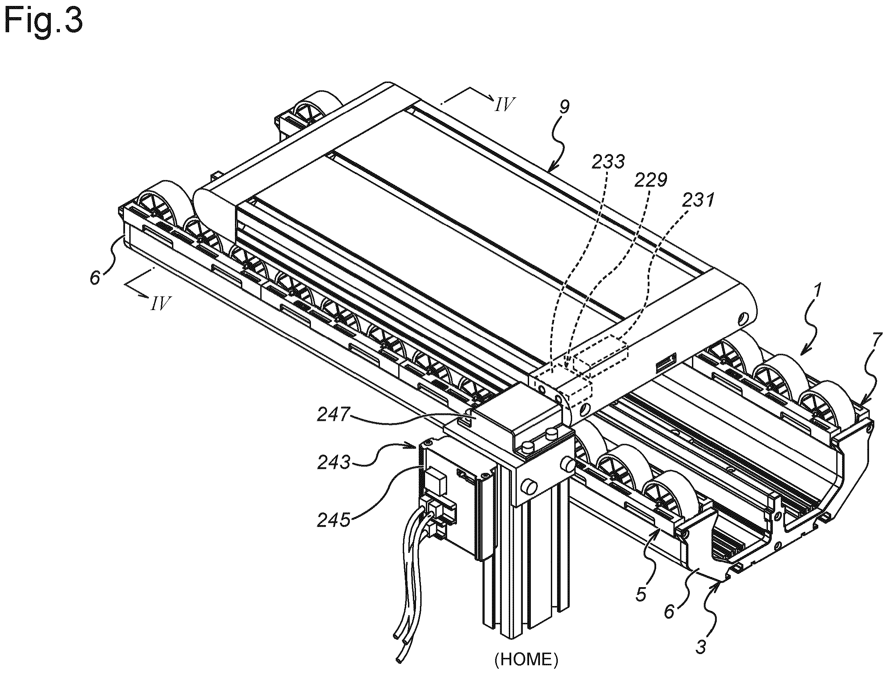

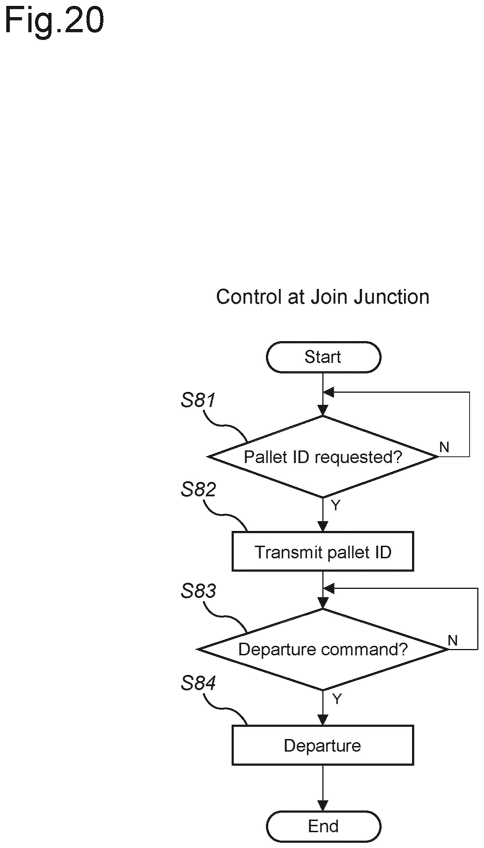

Now, a first embodiment of the present invention will be explained with reference to Fig. 1 and Fig. 20. Fig. 1 is a control system diagram showing an overall configuration of a self-propelled pallet transport apparatus according to a first embodiment of the present invention, and first, a transport path 1 is provided in a predetermined route. The transport path 1 is partially illustrated in Fig. 2 and Fig. 3. The transport path 1 has a frame 3, and a left-side roller conveyor 5 and a right-side roller conveyor 7, respectively installed on the left and right sides of the frame 3 as seen by the cross-sectional plane. A self-propelled pallet 9 is provided on the track pat 1, and a transported object ( unillustrated) placed on the self-propelled pallet 9 is transported by causing the self-propelled pallet 9 to travel in an appropriate direction along the transport path 1.

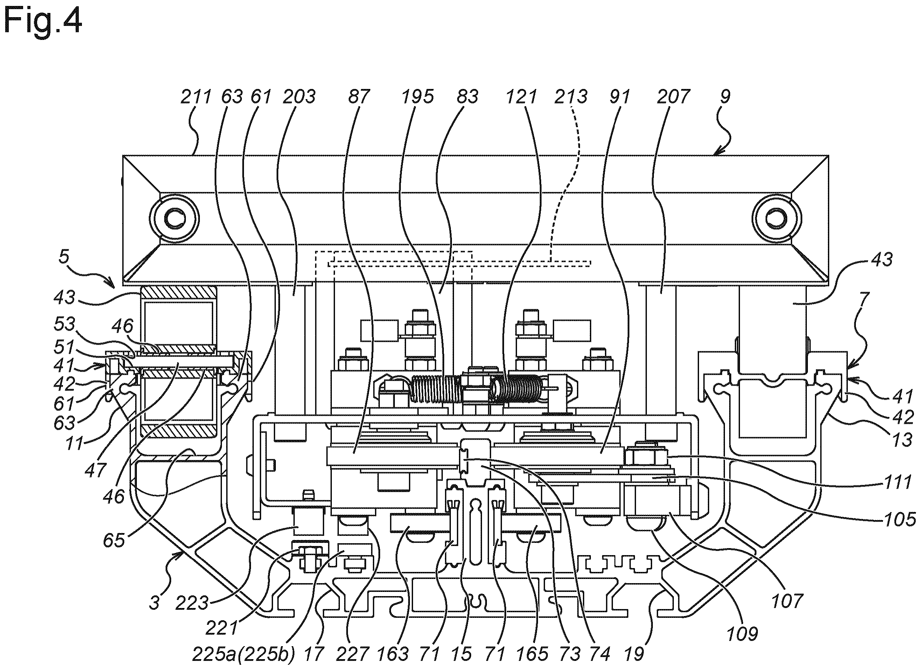

As illustrated in Fig. 4, the frame 3 is substantially in U-shaped, and a left-side roller conveyor installation part 11 is provided on the left-side end, and a right-side roller conveyor installation part 13 is provided on the right-side end. A power supply protrusion 15 is provided on the bottom at the center of the frame 3. The frame 3 has been made by extrusion molding, and the left-side roller conveyor installation part 11, the right-side roller conveyor installation part 13, and even the power supply protrusion 15, have been integrally molded.

Moreover, T-grooves 17, 19 are formed, respectively, on the left and right sides of the power supply protrusion 15 on the bottom of the frame 3. The frame 3 is fixed at a predetermined position by using the T-grooves 17, 19, and also by bolts and T-nuts (unillustrated). The frame 3 is set to be a predetermined length, and the transport path 1 is configured by consecutively providing the frames 3 at the predetermined length with each other.

Note that, as illustrated in Fig. 3, covers 6, 6, made of resin, are attached to each end of the frame 3, and when a plurality of frames 3 is connected, the resin covers 6 interpose between the frames 3, 3 facing each other. Moreover, the power supply protrusion 15 is not provided at a position of the cover 6.

As illustrated in Fig. 1, the transport path 1 has straight sections 1a, and the straight section 1a is configured by consecutively providing the frame 3 as described above. Moreover, the transport path 1 is provided with corner sections (Corner R), branch junctions (BR1 - BRn), and join junctions (JO1 - JOn). Moreover, the transport path 1 has ascending sections (UP) and descending sections (DOWN). As illustrated in Fig. 2, the corner section (Corner R) uses a corner section unit 21. The corner section unit 21 is provided with a plurality of balls 21a, and the self-propelled pallet 9 travels by itself on the plurality of balls 21a. Moreover, as illustrated in Fig. 2, each of the branch junctions (BR1 - BRn) and the join junctions (JO1 - JOn) uses a switching units 23. Moreover, each of the ascending sections (UP) and the descending sections (DOWN), as described above, uses an elevator (unillustrated).

The left-side roller conveyor 5 as described above is installed in the left-side roller conveyor installation part 11, and the right-side roller conveyor 7 is installed in the right-side roller conveyor installation part 13, of the frame 3.

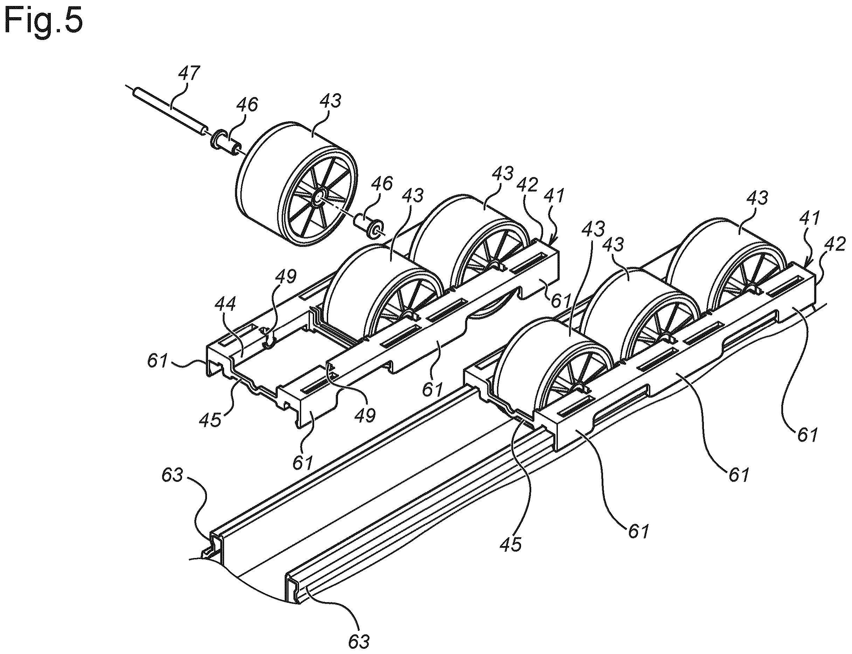

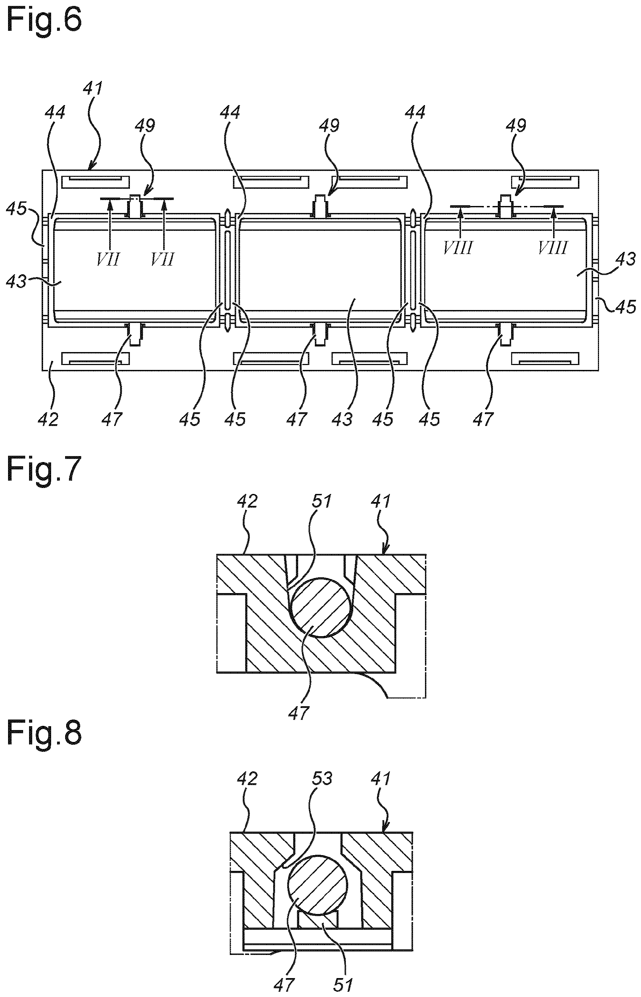

First, the configuration of the left-side roller conveyor 5 will be explained. As illustrated in Fig. 4, there is a cartridge 41, and the cartridge 41 has a cartridge frame 42 made of resin, and a plurality of rollers 43 detachably and rotatably attached to the cartridge frame 42. Thus, as illustrated in Fig. 5 and Fig. 6, the cartridge frame 42 is formed in a state that a plurality of (in a case of illustration of Fig. 5 and Fig. 6, three) roller through-holes 44 has been partitioned via ribs 45. The plurality number may be, for example, one, two, three or seven.

Next, with reference to the rib 45, as illustrated in Fig. 6, although one rib 45 is provided at an end of the cartridge frame 42, two ribs 45, 45 are provided by consecutively coupling with each other at intermediate positions. This is because, when the cartridge frame 42 is cut at a center of the two ribs 45, 45, the single rib 45 may remain on each side. For example, the resin-made cartridge frame 42 has bee formed to have a long length, and is cut at an arbitrary length. Then, the single rib 45 remains at each cut side.

As illustrated in Fig. 5, the roller 43 is rotatably retained by a shaft 47 via shaft retainers 49, 49 on the right and left. The both ends of the shaft 47 are supported, respectively, by shaft retainers 49, 49 of the cartridge frame 42. With reference to the shaft retainer 49, as illustrated in Fig. 7, the cartridge frame 42 is provided with a lower shaft supporter 51, which supports the shaft 47 from below. As illustrated in Fig. 8, a part of the lower shaft supporter 51 is elongated in a tongue-like shape. Moreover, an upper shaft supporter 53, which supports the shaft 47 from above, is provided at a deep inside of the lower shaft supporter 51. The upper shaft supporter 53 is protrusively provided from the both sides, to form a smaller diameter than the outer diameter of the shaft 47. The end of the shaft 47 is retained in a state sandwiched from above and below between the lower shaft supporter 51 and the upper shaft supporter 53.

When the roller 43 rotatably retained by the shaft 47 is attached to the cartridge frame 42, the upper part of the cartridge frame 42 is slightly bent by elastic deformation, to form a convex shape, and thus, a space between the shaft retainers 49, 49 on the both sides become slightly expanded, into which the roller 43, rotatably retained by the shaft 47, is dropped. When the above bent state is released, the both ends of the shaft 47 are retained in a sandwiched state from above and below, between the lower shaft supporters 51 and the upper shaft supporters 53 of the shaft retainers 49, 49 on the both sides.

As illustrated in Fig. 4 and Fig. 5, engagement parts 61, 61 are provided intermittently, on the right and left sides of the cartridge frame 42. Correspondingly, engagement parts 63, 63 are provided, to be engaged with the engagement parts 61, 61, in the left-side roller conveyor installation part 11. Moreover, the left-side roller conveyor installation part 11 is provided with a hollow part 65, which accommodates the roller 43 rotatably. The cartridge 41, provided with the plurality of rollers 43 rotatably, is installed to cover the left-side roller conveyor installation part 11 from above. Accordingly, the engagement parts 61, 61 engage with the engagement parts 63, 63, and the cartridge 41 is installed on the left-side roller conveyor installation part 11. A required number of the cartridges 41 is installed on the left-side roller conveyor installation part 11, and accordingly, the left-side roller conveyor 5 is configured.

The right-side roller conveyor 7 has substantially the same configuration as above. Moreover, the switching unit 23 described above is configured by installing the left-side roller conveyor 5 and the right-side roller conveyor 7 in the frame 3 having a predetermined small length, and is configured to allow turning around.

As illustrated in Fig. 4, the power supply protrusion 15 is provided with power supply conductors 71, 71, respectively, on each of outer surfaces on the right and left. Moreover, a rail 73 is attached on the upper part of the power supply protrusion 15, to improve driving force of the self-propelled pallet 9. A resin plate 74 is fit into the left side surface, as seen in Fig. 4, of the rail 73. This serves to improve the friction force of a drive roller and driven rollers, which will be described afterwards.

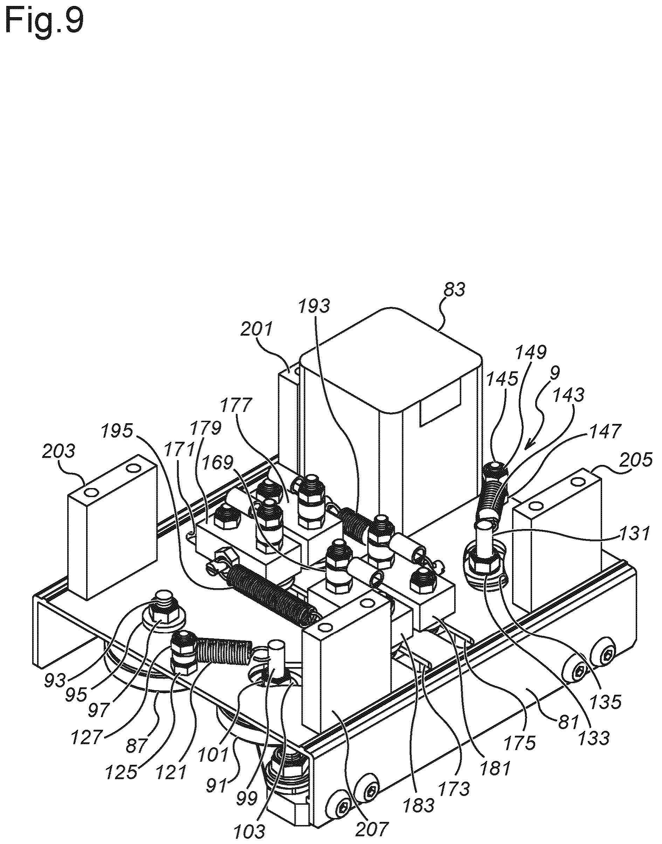

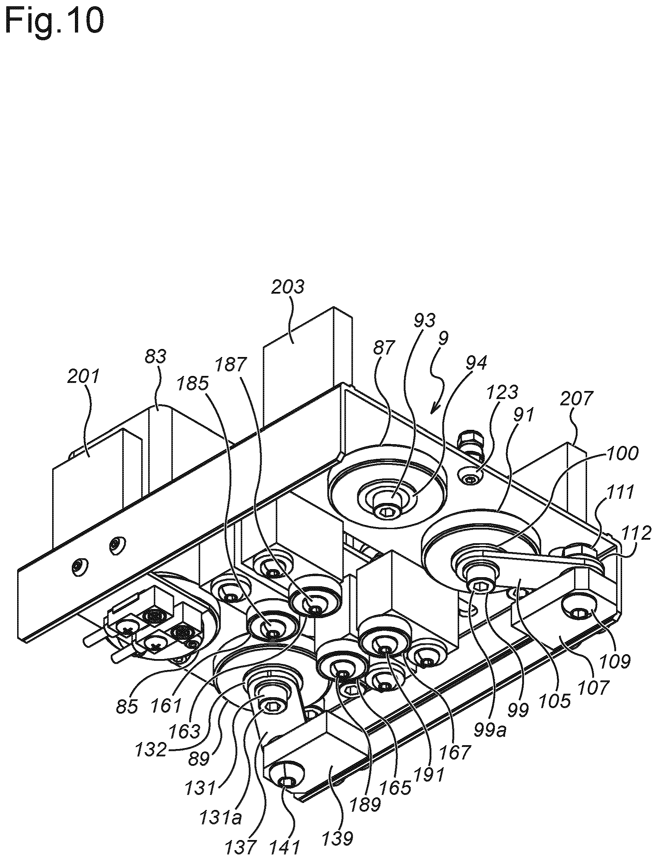

Next, the configuration of the self-propelled pallet 9 will be explained. As illustrated in Fig. 9 and Fig. 10, there is a pallet body 81, and the pallet body 81 is substantially in a rectangular shape, and the cross-sectional plane thereof is in an inverted U-letter shape. A drive motor 83 is mounted on one of four corners on the front side of the pallet body 81. A rotation shaft (unillustrated) of the drive motor 83 penetrates through the pallet body 81, and as illustrated in Fig. 10, is provided to protrude from the back side of the of the pallet body 81, to which a drive roller 85 is secured.

As illustrated in Fig. 10, driven rollers 87, 89, 91 are attached, other than the drive roller 85. The driven roller 87 is rotatably attached to a bolt 93 via a bushing 94. A tip of the bolt 83 protrudes from the front side of the pallet body 81, into which a nut 97 is screwed via a washer 95.

The driven roller 91 is rotatably attached to a bolt 99 via a bushing 100. A tip of the bolt 99 is provided to protrude from the front side of the pallet body 81, into which a nut 101 is screwed, and accordingly, the driven roller 91 is rotatably secured to the bolt 99. The pallet body 81 has an arc groove 103 formed therein, and a fastening part of the bolt 99 with the nut 101 is configured to be movable along the arc groove 103.

An end of an arm 105 interposes between a bolt head 99a of the bolt 99 and the bushing 100. A bracket 107 is provided on the back side of the pallet body 81, and another end of the arm 105 is secured to the bracket 107 by a bolt 109, a nut 111, and a bushing 112.

An end of a coil spring 121 is secured to a tip of the bolt 99. Moreover, a bolt 123 is provided to protrude from the back side toward the front side of the pallet body 81, into which nuts 125, 127 are screwed. Another end of the coil spring 121 is fastened to the bolt 123 provided between the nuts 125, 127. The spring force of the coil spring 121 is applied to the driven roller 91 toward the driven roller 87.

The driven roller 89 has substantially the same configuration as above. The driven roller 89 is rotatably attached to a bolt 131 via a bushing 132. A tip of the bolt 131 is provided to protrude from the front side of the pallet body 81, into which a nut 133 is screwed, and accordingly, the driven roller 89 is rotatably secured to the bolt 131. The pallet body 81 has an arc groove 135 formed therein, and a fastening part of the bolt 131 with the nut 133 is configured to be movable along the arc groove 135.

An end of an arm 137 interposes between a bolt head 131a of the bolt 131 and the bushing 132. A bracket 139 is provided on the back side of the pallet body 81, and another end of the arm 137 is secured to the bracket 139 by a bolt 141, and a nut and a bushing (unillustrated).

An end of a coil spring 143 is secured to a tip of the bolt 131. Moreover, a bolt 145 is provided to protrude from the back side toward the front side of the pallet body 81, into which nuts 147, 149 are screwed. Another end of the coil spring 143 is fastened to the bolt 145 provided between the nuts 147, 149. The spring force of the coil spring 143 is applied to the driven roller 89 toward the drive roller 85.

The drive roller 85, and the driven rollers 87, 89, 91, press the rail 73 to be sandwiched from the right and left sides, and in such a state, by driving the drive roller 85 with the drive motor 83, the self-propelled pallet 9 is caused to travel by itself along the rail 73.

As illustrated in Fig. 10, the pallet body 81 is provide with electrodes 161, 163, 165, 167, two each on the right and left, opposing to each other with the power supply protrusion 15 therebetween. The pallet body 81 has long holes 169, 171, 173, 175 penetrating through the front and back sides. Blocks 177, 179, 181, 183 are movably attached, respectively, to the long holes 169, 171, 173, 175. The electrodes 161, 163, 165, 167 are rotatably attached, respectively, to the blocks 177, 179, 181, 183, by the bolts 185, 187, 189, 191, via bushings (unillustrated).

A coil spring 193 is provided in a stretched state between the block 177 and the block 181, and a coil spring 195 is provided in a stretched state between the block 179 and the block 183. Consequently, the electrodes 161, 163, 165, 167 are pressed to become in contact with the power supply conductors 71, 71. Thus, the electric power is supplied to the self-propelled pallet 9, via the power supply conductors 71, 71, and the electrodes 161, 163, 165, 167.

The pallet body 81 has frames 201, 203, 205, 207, each of which is provided on four corners on the front side. As illustrated in Fig. 4, a transported object placement section 211 is attached onto the frames 201, 203, 205, 207, and a transported object (unillustrated) is placed on the transported object placement section 211. A substrate 213 is accommodated in the inside of the transported object placement section 211. Various electric / electronic components, sensors, etc., are mounted on the substrate 213.

As illustrated in Fig. 4, a stop dog 221 is provided at a bottom of a predetermined position of the frame 3, and correspondingly, a stop dog detection sensor 223 is provided on the pallet body 81 of the self-propelled pallet 9. When the self-propelled pallet 9 travels by itself and arrives at a predetermined position, the stop dog detection sensor 223 detects the stop dog 221, and consequently, the self-propelled pallet 9 stops. Moreover, a high-speed dog (START) 225a and a high-speed dog (END) 225b are provided at the bottom of predetermined positions of the frame 3, and correspondingly, a high-speed dog detection sensor 227 is provided on the pallet body 81 of the self-propelled pallet 9. When the self-propelled pallet 9 travels by itself and arrives at a predetermined position, the high-speed dog detection sensor 227 detects the high-speed dog (START) 225a, and the travel is switched from low-speed to high-speed. In a state that the travel has been switched to high-speed, when the high-speed dog detection sensor 227 detects the high-speed dog (END) 225b, the travel is switched from high-speed to low-speed.

In the present embodiment, the stop dog detection sensor 223 and the high-speed dog detection sensor 227 adopt magnetic sensors.

Note that, it is also possible to provide the high-speed dogs consecutively in a predetermined area, and the travel at high-speed is kept while these high-speed dogs are detected, and the travel is switched to low-speed when the high-speed dogs are not detected.

Moreover, as illustrated in broken lines of Fig. 3, an optical communication unit 229 is mounted in the self-propelled pallet 9, and the optical communication unit 229 has a controller 231 and a communication head 233.

As illustrated in Fi . 1, the transport path 1 is provided with a home position (HOME), and the stop dog 221 is provided at the home position (HOME). Moreover, a host PC 241 and an optical communication unit 243 are provided at the home position (HOME). The optical communication unit 243 is configured by a controller 245 and a communication head 247. Fig. 3 illustrates the optical communication unit 243 at the home position (HOME). When the self-propelled pallet 9 travels and arrives at the home position (HOME), the stop dog detection sensor 223 detects the stop dog 221, and accordingly, the self-propelled pallet 9 stops. In such a state, required communication and information processing are executed among the host PC 241, the controller 245 of the optical communication unit 243, and the controller 231 of the optical communication unit 229 of the self-propelled pallet 9.

Note that, the optical communication unit 243 has substantially the same configuration as that of the optical communication unit 229 installed in the self-propelled pallet 9.

As illustrated in Fig. 1, stations (ST1 - STn) are set at appropriate positions of the transport path 1, and at these stations, the stop dogs 221 are provided, and furthermore, arbitrary robots (MC1 - MCn) and the optical communication units 243 are provided. Each of the robots (MC1 - MCn) is provided with a control device such as PLC. When the self-propelled pallet 9 travels and arrives at any of the stations (ST1 - STn), the stop dog detection sensor 223 detects the stop dog 221, and accordingly, the self-propelled pallet 9 stops. In such a state, required communication and information processing are executed among the PLC of any of the robots (MC1 - MCn), the controller 245 of the optical communication unit 243, and the controller 231 of the optical communication unit 229 of the self-propelled pallet 9. Simultaneously, when required, a predetermined work is performed by any of the robots (MC1 - MCn).

Moreover, at appropriate positions of the transport path 1, branch points (B1 - Bn) are set, respectively corresponding to the branch junctions (BR1 - BRn) described above. Each of the branch point (B1 - Bn) is provided with the stop dog 221, and also provided with a controller (CNTL) and the optical communication unit 243. When the self-propelled pallet 9 travels and arrives at any of the branch points (B1 - Bn), the stop dog detection sensor 223 detects the stop dog 221, and accordingly, the self-propelled pallet 9 stops. In such a state, required communication and information processing are executed among the controller (CNTL), the controller 245 of the optical communication unit 243, and the controller 231 of the optical communication unit 229 of the self-propelled pallet 9. Simultaneously, when required, the switching unit 23 of any of the branch junctions (BR1 - BRn) executes the switching action.

Similarly, at appropriate positions of the transport path 1, join points (J1 - Jn) are set, respectively corresponding to the join junctions (JO1 - JOn) described above, and each of the join point (J1 - Jn) is provided with the stop dog 221, and also provided with the controller (CNTL) and the optical communication unit 243. When the self-propelled pallet 9 travels and arrives at any of the join points (J1 - Jn), the stop dog detection sensor 223 detects the stop dog 221, and accordingly, the self-propelled pallet 9 stops. In such a state, required communication and information processing are executed among the controller (CNTL), the controller 245 of the optical communication unit 243, and the controller 231 of the optical communication unit 229 of the self-propelled pallet 9. Simultaneously, when required, the switching unit 23 of any of the join junctions (JO1 - JOn) executes the switching action.

At appropriate positions of the transport path 1, ascending points (U1 - Un) are set, respectively corresponding to the ascending sections (UP) described above, and each of the ascending point (U1 - Un) is provided with the stop dog 221, and also provided with the controller (CNTL) and the optical communication unit 243. When the self-propelled pallet 9 travels and arrives at any of the ascending points (U1 - Un), the stop dog detection sensor 223 detects the stop dog 221, and accordingly, the self-propelled pallet 9 stops. In such a state, required communication and information processing are executed among the controller (CNTL), the controller 245 of the optical communication unit 243, and the controller 231 of the optical communication unit 229 of the self-propelled pallet 9. Simultaneously, a predetermined ascending / descending action is executed by the elevator.

Note that, the ascending section (UP) is also provided with the optical communication unit 243.

At appropriate positions of the transport path 1, descending points (D1 - Dn) are set, respectively corresponding to the descending sections (DOWN) described above, and each of the descending point (D1 - Dn) is provided with the stop dog 221, and also provided with the controller (CNTL) and the optical communication unit 243. When the self-propelled pallet 9 travels and arrives at any of the descending points (D1 - Dn), the stop dog detection sensor 223 detects the stop dog 221, and accordingly, the self-propelled pallet 9 stops. In such a state, required communication and information processing are executed among the controller (CNTL), the controller 245 of the optical communication unit 243, and the controller 231 of the optical communication unit 229 of the self-propelled pallet 9. Simultaneously, a predetermined ascending / descending action is executed by the elevator.

Note that, the descending section (DOWN) is also provided with the optical communication unit 243.

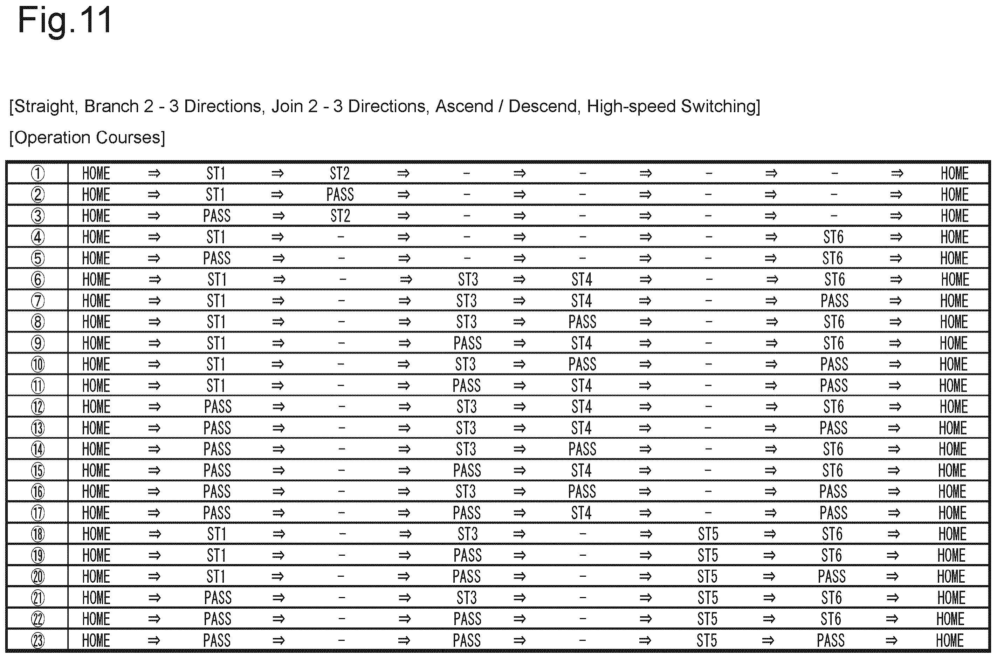

A memory of the host PC 241, described above, memorizes a route information as illustrated in Fig. 11. In Fig. 11, route Nos. are described in the column, and YES / NO of working at each station (ST1 - STn) is described in each of the rows. The controller 245 of the optical communication unit 243 of any of the stations (ST1 - STn) selects the route information of a predetermined route No. among the route information as illustrated in Fig. 11, and transmits that route information to the self-propelled pallet 9, which has arrived at the home position (HOME). Accordingly, the self-propelled pallet 9 travels by itself, based on the route information of the received route No.

Note that, in Fig. 11, when seeing the column of "ST2," there are any of indications among "ST2," "PASS" and "-." "ST2" means that there is a predetermined working performed at the station (ST2), and "PASS" means that the self-propelled pallet 9 passes through the station (ST2) but there is no working, and "-" means that the self-propelled pallet 9 does not pass the station (ST2) at all.

Moreover, at each of the stations (ST1 - STn), the optical communication unit 243 outputs node information to each of the self-propelled pallets 9. The node information is information for identifying each of the stations (ST1 - STn). The self-propelled pallet 9 compares pre-inputted travel course information with the node information, and determines YES / NO of working at that station (ST1 - STn), and outputs PASS / STOP signal.

Now, based on the configuration as described above, the function will be explained.

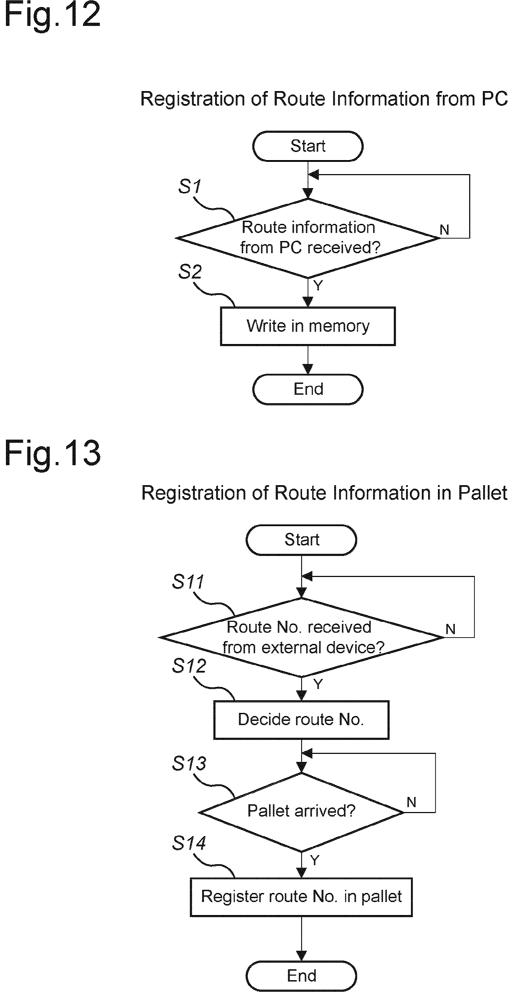

First, processing at the home position (HOME) will be explained with reference to Fig. 12 and Fig. 13. When the self-propelled pallet 9 travels and arrives at the home position (HOME), and when the stop dog detection sensor 223 detects the stop dog 221, the self-propelled pallet 9 stops. In such a state, communication is executed among the host PC 241, the optical communication unit 243, and the optical communication unit 229 of the self-propelled pallet 9. Fig. 12 and Fig. 13 shows contents of information processing in the optical communication unit 243.

Fig. 12 and Fig. 13 shows the information processing in the controller 245 of the optical communication unit 243.

First, as shown in Fig. 12, it is determined whether or not the route information is received from the host PC 241 (step S1). The route information described above means the all route information shown in Fig. 11. If it is determined that the route information is received, the process proceeds to step S2, where the received route information is written in the memory.

Next, as shown in Fig. 13, it is determined whether or not the route No. is received from an external device (for example, the host PC 241, a bar code / QR Code (registered trademark) reader, etc.) (step S11). If the route No. is received, the process proceeds to step S12. At step S12, the route No. is decided. Next, the process proceeds to step S13, where it is determined whether or not the self-propelled pallet 9 has arrived. If it is determined that the self-propelled pallet 9 has arrived, the process proceeds to step S14, where the route information of a predetermined route No. is registered in the self-propelled pallet 9.

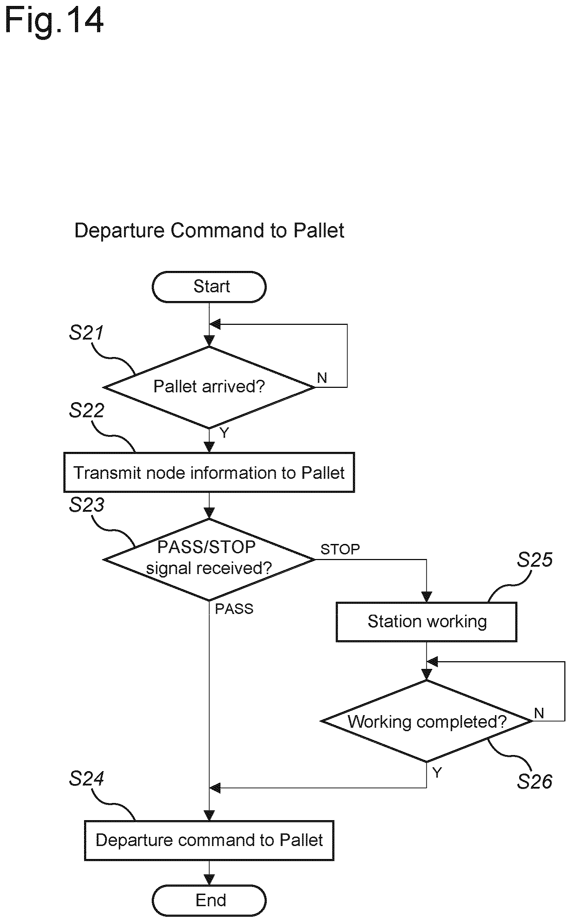

Next, processing at the stations (ST1 - STn) will be explained with reference to Fig. 14. Fig. 14 shows information processing in the controller 245 of the optical communication unit 243 at the stations (ST1 - STn). First, at step S21, it is determined whether or not the self-propelled pallet 9 has arrived. If it is determined that the self-propelled pallet 9 has arrived, the process proceeds to step S22. At step S22, the node information is transmitted to the self-propelled pallet 9. Next, the process proceeds to step S23, where it is determined whether or not the PASS / STOP signal is received. If the PASS signal is received, the process proceeds to step S24, where a departure command is outputted to the self-propelled pallet 9. On the contrary, if it is determined that the STOP signal is received at step S23, the process proceeds to step S25. At step S25, station working is performed by the robot (MC1 - MCn). Next, the process proceed to step S26. At step S25 , it is determined whether or not the station working is completed. If it is determined that the station working is completed, the process proceeds to step S24.

Note that, in the information processing at step S25 and step S26, a required information processing is executed between the robot (MC1 - MCn) and the PLC.

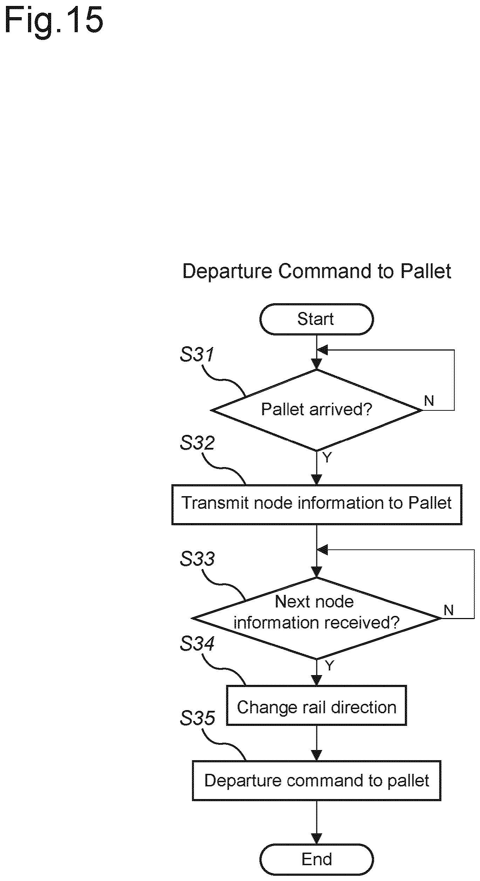

Next, processing at the branch points (B1 - Bn) will be explained with reference to Fig. 15. Fig. 15 shows information processing in the controller 245 of the optical communication unit 243 at the branch points (B1 - Bn). First, at step S31, it is determined whether or not the self-propelled pallet 9 has arrived. If it is determined that the self-propelled pallet 9 has arrived, the process proceeds to step S32. At step S32, the node information is transmitted to the self-propelled pallet 9. Next, the process proceeds to step S33, where it is determined whether or not the next node information is received. If it is determined that the next node information is received, the process proceeds to step S34. At step S34, the direction of the switching unit 23 is changed. Next, the process proceeds to step S35, where the departure command is outputted to the self-propelled pallet 9.

Note that, in the information processing at step S34, a required communication and information processing is executed with the controller (CNTL).

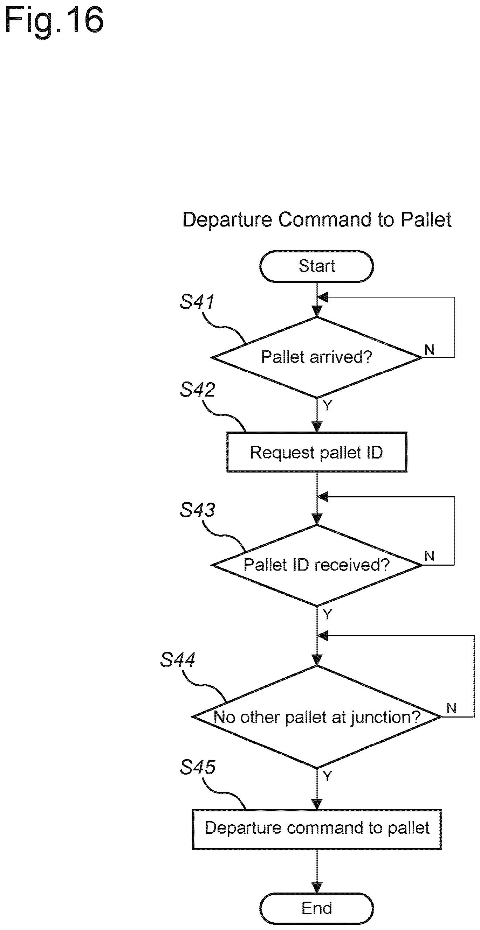

Next, processing at the join points (J1 - Jn) will be explained with reference to Fig. 16. Fig. 16 shows information processing in the controller 245 of the optical communication unit 243 at the join points (J1 - Jn). First, at step S41, it is determined whether or not the self-propelled pallet 9 has arrived. If it is determined that the self-propelled pallet 9 has arrived, the process proceeds to step S42. At step S42, an ID is requested to the self-propelled pallet 9. Next, the process proceeds to step S43, where it is determined whether or not the ID is received from the self-propelled pallet 9. If it is determined that the ID is received, the process proceeds to step S44. At step S44, it is determined whether or not another self-propelled pallet 9 is present at the join junction (JO1 - JOn). If it is determined that no other self-propelled pallet 9 is present, the process proceeds to step S45. At step S45, the departure command is outputted to the self-propelled pallet 9.

Note that, in the information processing at step S44, a required communication and information processing is executed with the controller (CNTL).

Next, information processing in the controller 231 of the optical communication unit 229 of the self-propelled pallet 9, at the home position (HOME), the stations (ST1 - STn), the branch points (B1 - Bn), and the join points (J1 - Jn), described above, will be explained.

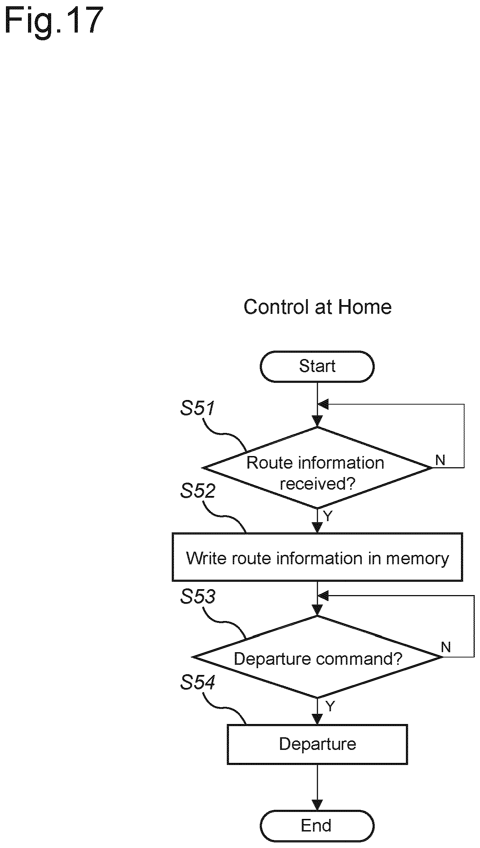

First, processing at the home position (HOME) will be explained with reference to Fig. 17. First, at step S51, it is determined whether or not the route information is received. If it is determined that the route information is received, the process proceeds to step S52. At step S52, the route information is written in the memory. Next, the process proceeds to step S53, where it is determined whether or not the departure command is received. If it is determined that the departure command is received, the process proceeds to step S54, where the departure is executed.

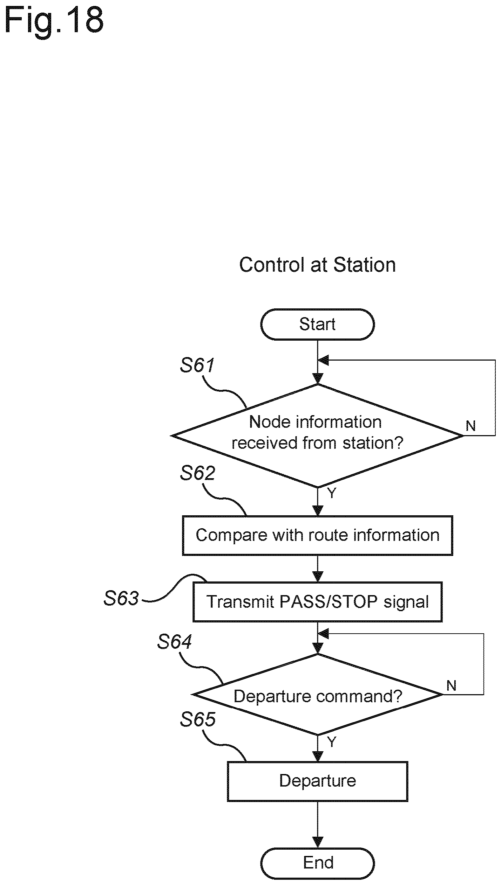

Next, processing at the stations (ST1 - STn) will be explained with reference to Fig. 18. First, at step S61, it is determined whether or not the node information is received from the station (ST1 - STn). If it is determined that the node information is received, the process proceeds to step S62. At step S62, comparison processing with the route information is executed. Next, the process proceeds to step S63, where the PASS / STOP signal is transmitted to the station side. Next, the process proceeds to step S64, where it is determined whether or not the departure command is received. If it is determined that the departure command is received, the process proceeds to step S65, where the departure is executed.

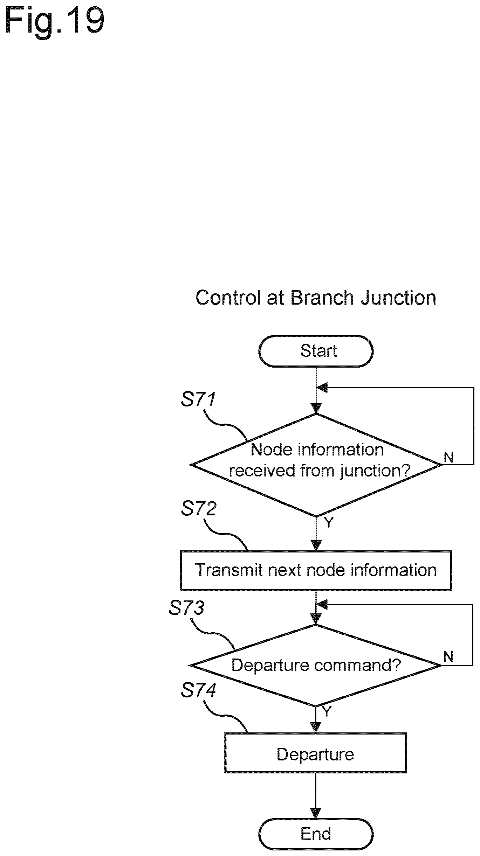

Next, processing at the branch points (B1 - Bn) will be explained with reference to Fig. 19. First, at step S71, it is determined whether or not the node information is received from the branch point (B1 - Bn). If it is determined that the node information is received, the process proceeds to step S72. At step S72, the next node information is transmitted. Next, the process proceeds to step S73, where it is determined whether or not the departure command is received. If it is determined that the departure command is received, the process proceeds to step S74, where the departure is executed.

Next, processing at the join points (J1 - Jn) will be explained with reference to Fig. 20. First, at step S81, it is determined whether or not there is a pallet ID request from the join point (J1 - Jn). If it is determined that there is the pallet ID request, the process proceeds to step S82. At step S82, the pallet ID is transmitted. Next, the process proceeds to step S83, where it is determined whether or not the departure command is received. If it is determined that the departure command is received, the process proceeds to step S84, where the departure is executed.

Also, at the ascending points (U1 - Un) and the descending points (D1 - Dn), a predetermined communication and information processing is executed between the controller 245 of the optical communication unit 243 and the controller 231 of the optical communication unit 229 of the self-propelled pallet 9.

For example, when the self-propelled pallet 9 arrives at any of the ascending points (U1 - Un), the stop dog detection sensor 223 detects the stop dog 221, and the self-propelled pallet 9 stops. Next, it is determined whether or not the elevator of the ascending section (UP) has descended, and if it is determined that the elevator has descended, the self-propelled pallet 9 is caused to travel by itself. Next, it is determined whether or not the self-propelled pallet 9 is loaded on the elevator, and if it is determined that the self-propelled pallet 9 is loaded, the elevator is caused to ascend. Next, it is determined whether or not the elevator has ascended or not, and if it is determined that the elevator has ascended, the self-propelled pallet 9 is caused to travel by itself.

Similarly, when the self-propelled pallet 9 arrives at any of the descending points (D1 - Dn), the stop dog detection sensor 223 detects the stop dog 221, and the self-propelled pallet 9 stops. Next, it is determined whether or not the elevator of the descending section (DOWN) has ascended, and if it is determined that the elevator has ascended, the self-propelled pallet 9 is caused to travel by itself. Next, it is determined whether or not the self-propelled pallet 9 is loaded on the elevator, and if it is determined that the self-propelled pallet 9 is loaded, the elevator is caused to descend. Next, it is determined whether or not the elevator has descended or not, and if it is determined that the elevator has descended, the self-propelled pallet 9 is caused to travel by itself.

Next, switching between high-speed / low-speed will be explained. When the high-speed dog detection sensor 227 detects the high-speed dog (START) 225a, the travel is switched from low-speed to high-speed. In a state that the travel has been switched to high-speed, when the high-speed dog detection sensor 227 detects the high-speed dog (END) 225b, the travel is switched from high-speed to low-speed.

Next, the maintenance of the transport path 1 will be explained. For example, if the roller 43 is damaged due to aging, only the cartridge 41, to which the damage roller 43 has been attached, is removed. Next, from the removed cartridge 41, the damaged roller 43 is removed, and a new roller 43 is attached thereto. Thereafter, the cartridge 41 is attached to the original position of the frame 3.

In the sequence of these operations, no tool is required.

As described above, according to the present embodiment, it is possible to achieve the following effects.

First, it is possible to simplify the configuration and facilitate the assembling of the self-propelled pallet transport apparatus. This is because, the transport path 1 may be configured only by connecting the frames 3, installing the left-side roller conveyors 5 and the right-side roller conveyors 7 thereon, and placing the self-propelled pallet 9 to drive by itself.

Moreover, the power supply protrusion 15 is integrally provided on the frame 1, and the rail 73 is provided thereon, and consequently, it is possible to provide the configuration easily, which causes the self-propelled pallet 9 to travel in a predetermined route.

Moreover, the single drive roller (drive wheel) 85 and the three driven rollers (driven wheels) 87, 89, 91 are provided for the self-propelled travelling of the self-propelled pallet 9, and the drive wheel 85 and the driven wheels 87, 89, 91, two each on the right and left, press the rail 73 to be sandwiched from the both sides, and consequently, it is possible to provide secure and stable self-propelled travel.

Moreover, the power supply to the self-propelled pallet 9 is accomplished by pressing the electrodes 185, 187, 189, 191, two each on the right and left, to become in contact with the power supply conductors 71, 71, respectively provided on the right and left of the power supply protrusion 15, and consequently, it is possible to supply the electric power stably.

Especially, there are some positions in the transport path 1 at which the power supply protrusions 15 are discontinued (for example, the part of the resin cover 6 of the frame 3, and the positions at which the corner section unit 21 and the switching unit 23 are used), and even at these positions, any of the electrodes 185, 187, 189, 191, two each on the right and left in the travelling direction, is surely pressed to become in contact with the power supply conductors 71, 71, and consequently, the power supply is not deteriorated.

Moreover, the both ends of the shaft 47 of the roller 43 are supported in a state of being sandwiched from above and below, by the lower shaft supporter (upward-oriented recess) 51 and the upper shaft supporter (downward-oriented recess) 53 of the cartridge frame 42 of the cartridge 41, and consequently, the roller 43 will not drop off unexpectedly. This advantage will significantly contribute to improvement of workability when the cartridge 41, to which the rollers 43 have been attached, is attached to and/or detached from the frame 3.

Moreover, in a state that the cartridge 41 is attached to the frame 3, the deformation of the cartridge 41 itself in the expanding direction is restricted, and consequently, it is possible to securely prevent unexpected drop-off of the roller 43.

Moreover, it is possible to disassemble / assemble the left-side roller conveyor 5 and the right-side roller conveyor 7 easily. This is because, the assembling may be accomplished only by arbitrarily selecting the cartridge 41 at a predetermined length to which an arbitrary number of rollers 43 is attached, and only by installing that cartridge 41 on the frame 3. The disassembling may also be accomplished only by performing the above process in a reversed order.

Moreover, when the roller 43 is damaged due to aging and should be replaced to the new roller 43, the replacement working is simple, because it is possible to accomplish the replacement working of the roller 43 only by detaching the cartridge 41, to which the damaged roller 43 has been attached. No tool is required for such a replacement working.

Moreover, the roller 43 may be detached from and/or attached to the cartridge 41 easily. No tool is required, either, for this process.

Moreover, the T-grooves 17, 19 are formed in the bottom of the frame 3, and consequently, the left-side roller conveyor 5 and the right-side roller conveyor 7 can be attached to arbitrary positions by using these T-grooves 17, 19.

Moreover, when various types of cartridges, respectively having predetermined lengths and provided with arbitrary numbers of rollers 43, have been prepared in advance, it is possible to provide a desired configuration of the left-side roller conveyor 5 and the right-side roller conveyor 7, by arbitrarily selecting therefrom and simply installing the cartridges 41 in the frame 3.

Moreover, with regard to controlling, first, the host PC 241 is installed, and the optical communication unit 229 is mounted on the self-propelled pallet 9, and the optical communication units 243 are installed, respectively, in the home position (HOME), the stations (ST1 - STn), the branch points (B1 - Bn), the join points (J1 - Jn), the ascending points (U1 - Un), and the descending points (D1 - Dn), and at the home position (HOME), by transmitting the route information from the host PC 241 to the self-propelled pallet 9, then, it is possible to perform predetermined works automatically, by communicating between the self-propelled pallet 9 and each of the optical communication units 243 of the stations (ST1 - STn), the branch points (B1 - Bn), the join points (J1 - Jn), the ascending points (U1 - Un), and the descending points (D1 - Dn). Consequently, it is possible to simplify the configuration required for controlling.

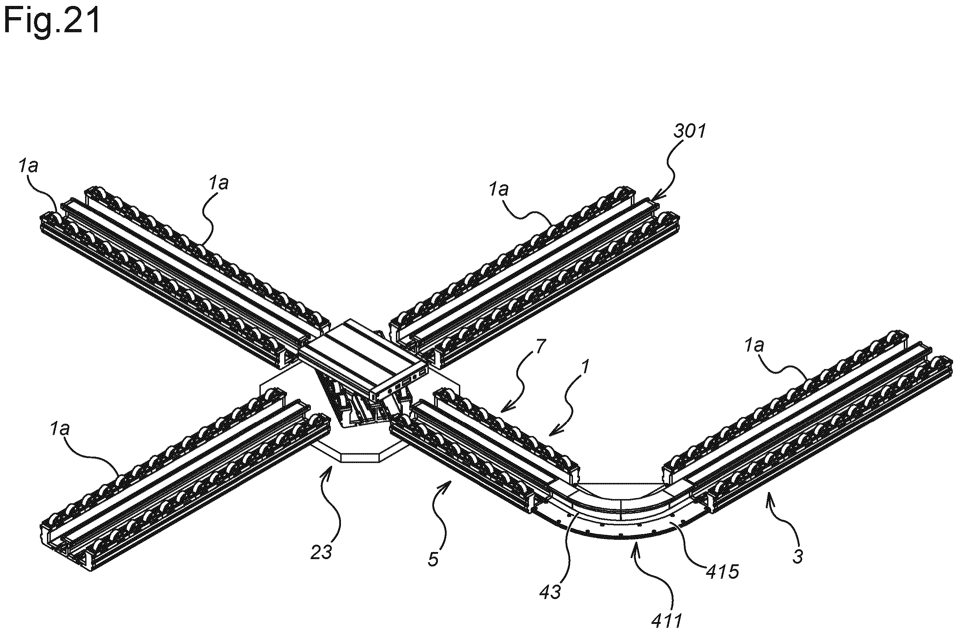

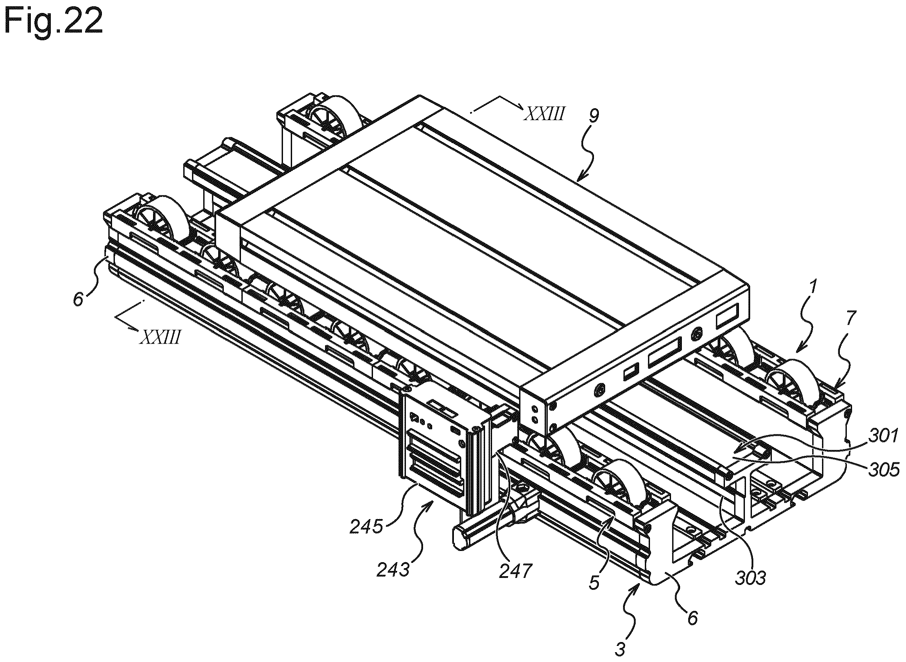

Next, a second embodiment of the present invention will be explained with reference to Fig. 21 to Fig. 26.

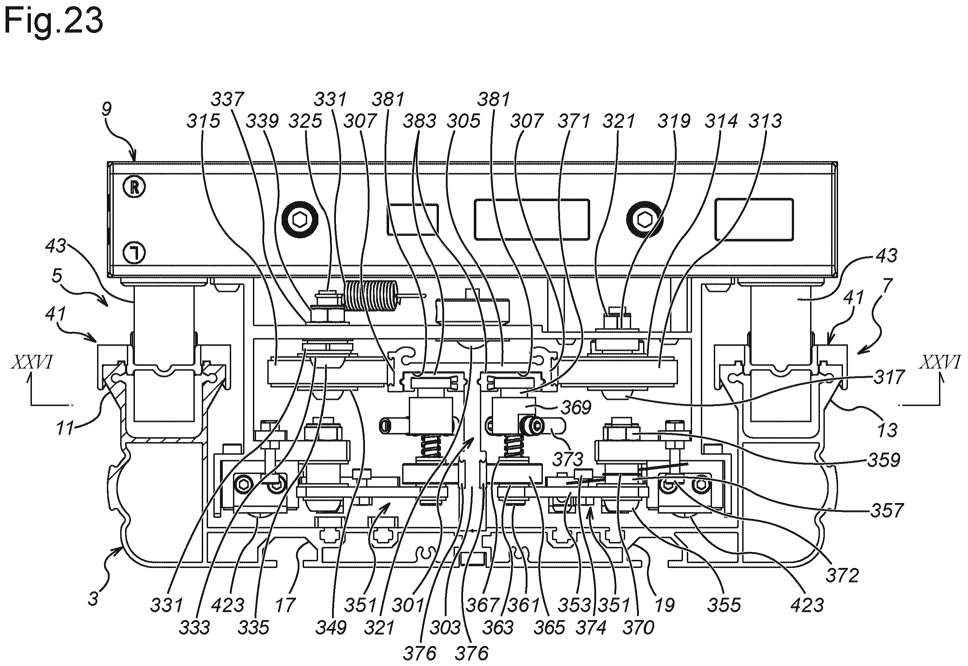

First, in the first embodiment, the I-shaped rail 73 is used (as illustrated in Fig. 4), but in the second embodiment, as illustrated in Fig. 21 to Fig. 23, a T-shaped rail 301 is used. The T-shaped rail 301 has a vertical part 303 and a horizontal part 305 at the upper end. As illustrated in Fig. 23, the horizontal part 305 extrudes in the right and left directions, which respectively serve as roller rotative contact parts 307, 307. Resin plates 308, 308 are embedded, respectively, in the roller rotative contact parts 307, 307. The T-shaped rail 301 has been made by extrusion molding.

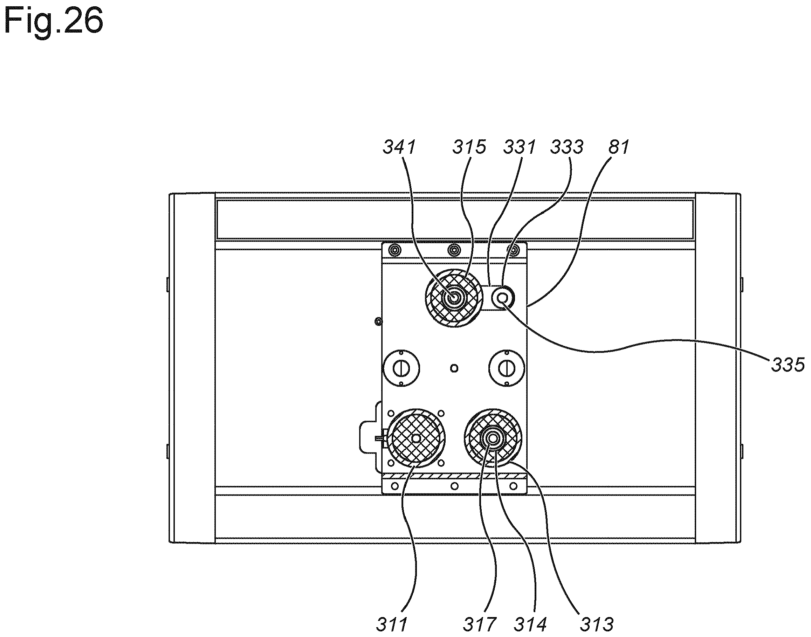

Moreover, in the first embodiment, the single drive roller and the three driven rollers are used, to travel along the I-shaped rail 73 (as illustrated in Fig. 4), but in the second embodiment, as illustrated in Fig. 26, a single drive roller 311 and two driven rollers 313, 315 are used, to travel along the horizontal part 305 of the T-shaped rail 301. Similar to the first embodiment, the drive roller 301 is rotatively driven by the drive motor 83.

As illustrated in Fig. 23 and Fig. 26, the driven roller 313 is secured to a bushing 314, and a bolt 317 is inserted into a hollow part of the bushing 314 and a through-hole (unillustrated) formed in the pallet body 81. A nut 321 is screwed into a tip of the bolt 317 via a washer 319. The driven roller 313 is rotatably attached to the pallet body 81 at a predetermined position thereof.

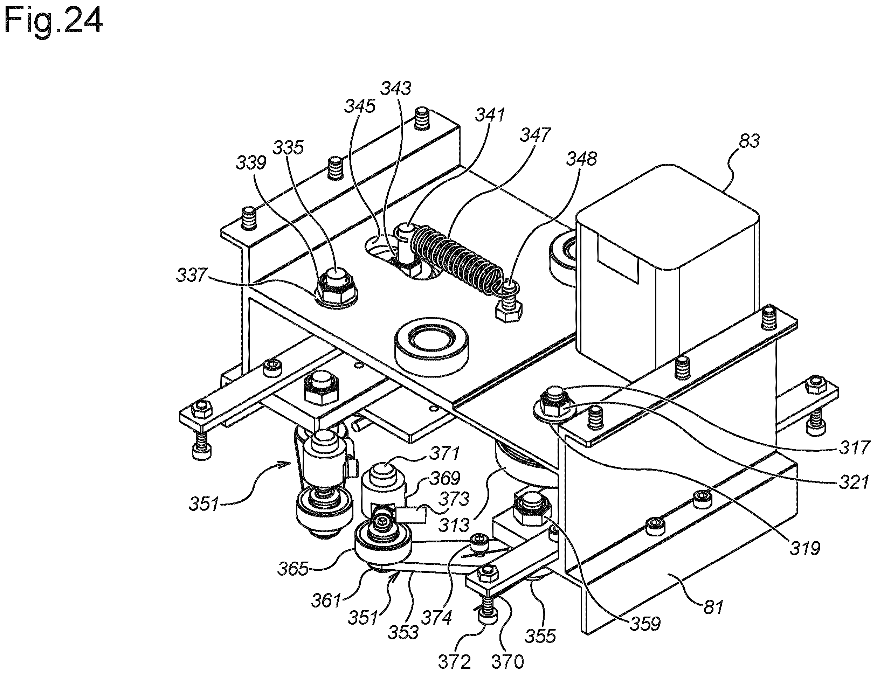

As illustrated in Fig. 26, an arm 331 is secured to a bushing 333, and a bolt 335 is inserted into a hollow part of the bushing 333 and a through-hole (unillustrated) of the pallet body 81. As illustrated in Fig. 24, a nut 339 is screwed into a tip of the bolt 335 via a washer 337. Accordingly, the arm 331 is attached to be pivotable around the bolt 335.

As illustrated in Fig. 26, a bolt 341 is inserted into a through-hole at a tip of the arm 331, and the driven roller 315 is rotatably attached to the bolt 341 via a bushing 342. As illustrated in Fig. 24, a nut 343 is screwed into the bolt 341. A tip of the bolt 341 is configured to penetrate through an arc groove 345, which has been formed in the pallet body 81, toward the front side of the pallet body 81, at which the tip of the bolt 341 is connected to an end of a coil spring 347. Another end of the coil spring 347 is connected to a bolt 348 attached to the pallet body 81.

The driven roller 315 is attached to be rotative around the bolt 341. The coil spring 347 applies force to the driven roller 315 toward the roller rotative contact part 307 of the horizontal part 303 of the rail 301. On the contrary, force is applied to the drive roller 311 and the driven roller 313 toward to roller rotative contact part 307 on the other side, of the horizontal part 303 of the rail 301. As illustrated in Fig. 26, the driven roller 315 is configured to oppose to the intermediate position between the drive roller 311 and the driven roller 313.

Thus, the number of rollers is reduced from four to three, and accordingly, it is possible to simplify the configuration.

A configuration of power supply is different from that of the first embodiment. First, as illustrated in Fig. 23, recesses 381, 381 are provided, on the lower surface side on the right and left, respectively, of the horizontal part 305 of the T-shaped rail 301. Power supply conductors 383, 383 are provided, respectively, in the inside of the recesses 381, 381.

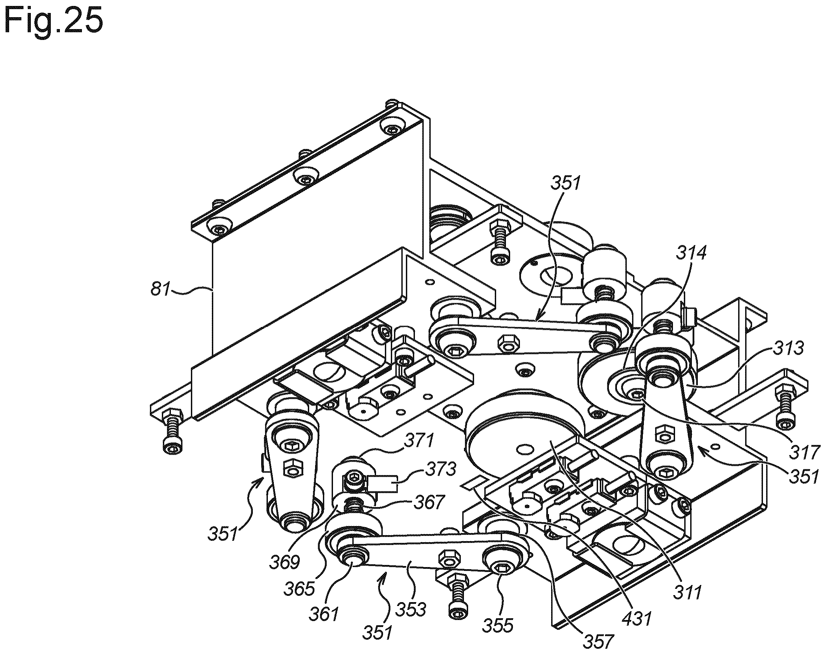

Correspondingly, as illustrated in Fig. 25, on the back side of the pallet body 81, a pair of electrode units 351, 351 is provided in a front end part, and another pair of electrode units 351, 351 is provided in a rear end part. As compared with the first embodiment, the pair of electrode units 351, 351 and the other pair of electrode units 351, 351 are separately provided with having a long distance from each other in the travelling direction.

The electrode unit 351 has the following configuration. First, an arm 353 is provided to be pivotable around a bolt 355. Thus, the arm 353 is secured to a bushing 357, and the bolt 355 is inserted into a hollow part of the bushing 357 and a through-hole (unillustrated) formed in the pallet body 81, and as illustrated in Fig. 24, a nut 359 is screwed into a tip of the bolt 355.

A pin 361 is inserted into a through-hole (unillustrated) at a tip of the arm 353, and the pin 361 penetrates through the bushing 363. A roller 365 is secured to the bushing 363. An electrode holder 369 is provided on the bushing 363 via a coil spring 367, and an electrode 371 is held at a tip of the electrode holder 369. Moreover, on the circumference of the bolt 355, a coil spring 370 is provided between the arm 353 and the pallet body 81. An end of the coil spring 370 abuts on the bolt 372, and another end thereof abuts on the bolt 374. Moreover, a cable 373 is drawn from the electrode holder 361.

Each of the four electrode units 351 has the same configuration, and therefore, the same reference signs will be allotted to the same elements in the drawings, and the explanation thereof will be omitted.

As illustrated in Fig. 23, each of the electrodes 371, 371 of the pair of the electrode units 351, 351 is configured to be inserted into the recesses 341, 341, respectively, and is pressed to become in contact with power supply conductors 343, 343, respectively. Similarly, as illustrated in Fig. 23, each of the electrodes 371, 371 of the other pair of the electrode units 351, 351 is also configured to be inserted into the recesses 341, 341, respectively, and is pressed to become in contact with power supply conductors 343, 343 respectively. Moreover, the rollers 365, 365, 365, 365 of the pair of electrode units 351, 351 and the other pair of electrode units 351, 351, are pressed to become in contact with the right and left sides of the vertical part 303 of the T-shaped rail 301. Resin plates 376, 376 are respectively embedded in the right and left sides of the vertical part 303.

With the above configuration, it is possible to supply electric power more stably than the case of the first embodiment.

First, as described in the first embodiment, there are some positions in the transport path 1 at which the power supply conductors 343, 343 are discontinued, but according to the second embodiment, as compared with the first embodiment, the pair of electrode units 351, 351 and another pair of electrode units 351, 351 are separately provided with having a long distance from each other in the travelling direction, and therefore, the electrodes 363, 363 of any one of the pair of electrode units 351, 351 is surely in contact with the power supply conductors 343, 343, and consequently, it is possible to supply electric power stably.

Moreover, the electrode 363 of each of the electrode units 351 is configured to be pressed from below toward the power supply conductor 343, the voltage becomes stable, and accordingly, it is also possible to supply electric power stably.

In the first embodiment, the explanation has been made for the case in which the cartridge frame 42, to which three rollers 43, 43, 43 are attached, and in the second embodiment, two rollers 43, 43 are attached. Moreover, the bushing 371 interposes between the roller 43 and the bearing 46.

Thus, the number of the rollers 43 is reduced, and accordingly, it is possible to simplify the configuration.

Moreover, the configuration of the corner section unit 21 (as illustrated in Fig. 2) has been changed. In the second embodiment, a corner section unit 411 made of resin is adopted, and the corner section unit 411 is configured by a rail 413 of which cross-section surface is in a shape of letter "T," and travelling paths 415, 415 made of resin, respectively provided on the right and left sides of the rail 413. The rail 413 is provided to be higher at a predetermined value than the horizontal part 305 of the rail 301. Moreover, the travelling paths 415, 415 are also provided to be higher at a predetermined value than the bottom surface of the frame 3.

Correspondingly, the self-propelled pallet 9 is rotatably provided with a pair of balls 421, 421 at the front and the rear in the travelling direction, and also rotatably provided with another pair of balls 423, 423 in the right-left direction orthogonal to the travelling direction.

At the corner section, the pair of balls 421, 421 of the self-propelled pallet 9 drifts on the upper surface of the rail 413, and the other pair of balls 423, 423 drifts on the upper surface of the travelling paths 415, 415.

Moreover, as illustrated in Fig. 25, a magnetic sensor 431 is installed adjacent to the drive roller 311. Correspondingly, a magnetic material (unillustrated) is installed at a predetermined position on the side of the drive roller 311. By detecting the magnetic material by the magnetic sensor 431, it is possible to detect whether or not the drive roller 311 rotates normally. In a case where the detection of magnetic material by the magnetic sensor 341 does not exceed a predetermined time, or in a case where the detection occurs continuously, the drive roller 311 is determined to be abnormal, and is stopped, and thereafter, is restarted.

Note that, the other configuration is substantially the same as that of the first embodiment, and therefore, the same reference signs will be allotted to the same elements in the drawings, and the explanation thereof will be omitted.

As described above, according to the present embodiment, it is possible to accomplish the same effects as those of the first embodiment, and furthermore, the following effects can be accomplished.

First, the driving is performed by three rollers, that is, the drive roller 311, and the driven rollers 313, 315, and consequently, as compared with the case of four rollers, it is possible to simplify the configuration.

Moreover, it is possible to supply electric power more stably. This is because, as compared with the first embodiment, the pair of electrode units 351, 351 and another pair of electrode units 351, 351 are separately provided with having a long distance from each other in the travelling direction, and therefore, the electrodes 363, 363 of any one of the pair of electrode units 351, 351 is surely in contact with the power supply conductors 343, 343, and also because, the electrode 363 of each of the electrode units 351 is configured to be pressed from below toward the power supply conductor 343.

Moreover, since the electrode 363 of each of the electrode units 351 is configured to be pressed from below toward the power supply conductor 343, it is possible to prevent an event in which a worker unintentionally touches an electric conduction part.

Moreover, two rollers 43, 43 are attached to the cartridge frame 42, and consequently, it is possible to simplify the configuration.

Moreover, with the magnetic sensor 431, it is possible, for example, to detect abnormal situation such as slipping of the drive roller 311.

The present invention is not limited to the first and the second embodiments as described above.

First, with regard to various types of the cartridges provided with arbitrary numbers of the rollers 41, the number is not limited to one, two, three or seven, and it is possible to be literally configured by any number arbitrarily.

Furthermore, the configurations in the drawings are shown for the illustrative purpose only.

### INDUSTRIAL APPLICABILITY

The present invention relates to a self-propelled pallet transport apparatus, and in particular, the present invention relates to those, which causes a self-propelled pallet to travel along a roller conveyor installed along an arbitrary track, to allow transporting of a transported object from an arbitrary location to another arbitrary location, and for example, the present invention is suitable for transportation of component parts in various factories, and for transportation of luggage at delivery sites, etc.

### EXPLANATION OF REFERENCE NUMERALS AND SIGNS

- 1: Transport Path
- 3: Frame
- 5: Left-side roller conveyor
- 7: Right-side roller conveyor
- 15: Power supply protrusion
- 41: Cartridge
- 43: Roller
- 71: Power supply conductor
- 73: Rail
- 85: Drive roller (Drive wheel)
- 87: Driven roller (Driven wheel)
- 89: Driven roller (Driven wheel)
- 91: Driven roller (Driven wheel)
- 185: Electrode
- 187: Electrode
- 189: Electrode
- 191: Electrode

## Claims

1. A self-propelled pallet transport apparatus, wherein:
a transport path is configured by consecutively connecting a plurality of frames along a predetermined route;
a left-side roller conveyor and a right-side roller conveyor are configured along the predetermined route, by installing cartridges provided with a plurality of rollers, both on the right and left sides of a cross-section plane of the frame; and
an arbitrary transported object is transported by causing a self-propelled pallet to travel on the left-side roller conveyor and the right-side roller conveyor.

2. The self-propelled pallet transport apparatus as claimed in Claim 1, wherein:
the frame is protrusively provided with a rail;
the self-propelled pallet is provided with a drive wheel and a driven wheel, and the rail is sandwiched by the drive wheel and the driven wheel both from the right and the left; and
the self-propelled pallet is caused to travel along the rail by driving the drive wheel by a drive motor.

3. The self-propelled pallet transport apparatus as claimed in Claim 2, wherein,
the drive wheel and the driven wheel are pressed to become in contact with the rail.

4. The self-propelled pallet transport apparatus as claimed in Claim 2, wherein,
the driven wheels are provided in a plural number.

5. The self-propelled pallet transport apparatus as claimed in Claim 2, wherein:
a power supply conductor is laid on the rail;
the self-propelled pallet is provided with an electrode to become in contact with the power supply conductor; and
electric power is supplied to the self-propelled pallet by contact of the electrode with the power supply conductor.

6. The self-propelled pallet transport apparatus as claimed in Claim 5, wherein:
the power supply conductors are provided both on the right and left sides of the rail; and
the electrodes are correspondingly provided both on the right and left sides.

7. The self-propelled pallet transport apparatus as claimed in Claim 6, wherein,
the electrodes both on the right and left sides are pressed to become in contact with the power supply conductors.

8. The self-propelled pallet transport apparatus as claimed in Claim 5, wherein,
the electrodes are provided in a plural number in a transport direction.

9. The self-propelled pallet transport apparatus as claimed in Claim 1, wherein,
the cartridge can be attached to / detached from the frame in a state that the rollers are provided in a plural number.

10. The self-propelled pallet transport apparatus as claimed in Claim 2, wherein,
the rail is in T-shaped, and is configured to allow the drive wheel and the driven wheel to become in rotative contact with both right and left ends of a horizontal part.

11. The self-propelled pallet transport apparatus as claimed in Claim 8, wherein,
a pair of the electrodes is provided in a front end part, and another pair of the electrodes is provided in a rear end part, in the transport direction.
